(19) Europäisches Patentamt
European Patent Office
Office européen des brevets

(11) **EP 4 003 032 B1**

(12) **EUROPEAN PATENT SPECIFICATION**

(45) Date of publication and mention
of the grant of the patent:
**23.07.2025 Bulletin 2025/30**

(21) Application number: **20747091.5**

(22) Date of filing: **29.07.2020**

(51) International Patent Classification (IPC):
**A23B 7/148** (2006.01)

(52) Cooperative Patent Classification (CPC):
**A23B 7/148**

(86) International application number:
**PCT/IB2020/020044**

(87) International publication number:
**WO 2021/019309 (04.02.2021 Gazette 2021/05)**

(54) **DYNAMIC CONTROLLED ATMOSPHERE METHOD AND APPARATUS**

VERFAHREN UND VORRICHTUNG FÜR DYNAMISCH KONTROLLIERTE ATMOSPHÄRE

PROCÉDÉ DYNAMIQUE À ATMOSPHÈRE CONTRÔLÉE ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2019 EP 19189427**

(43) Date of publication of application:
**01.06.2022 Bulletin 2022/22**

(73) Proprietor: **Federal University of Santa Maria
97105-900 Camobi, Santa Maria (BR)**

(72) Inventors:
• **THEWES, Fabio, Rodrigo**
**Santa Maria, 97105-900 (BR)**
• **BRACKMANN, Auri**
**Santa Maria, 97105-900 (BR)**
• **NEUWALD, Daniel Alexandre**
**88213 Ravensburg (DE)**

(74) Representative: **Gulde & Partner
Patent- und Rechtsanwaltskanzlei mbB
Berliner Freiheit 2
10785 Berlin (DE)**

(56) References cited:
**WO-A1-2013/125944 WO-A1-2017/134288
WO-A1-2017/198793**

• **BESSEMANS N ET AL: "A novel type of dynamic
controlled atmosphere storage based on the
respiratory quotient (RQ-DCA).", POSTHARVEST
BIOLOGY AND TECHNOLOGY, vol. 115, 2016,
pages 91 - 102, XP002795086**

## Description

The present invention relates to a method and an apparatus for controlling the atmosphere in a space. In particular, the present invention relates to a method and apparatus for controlling the atmosphere in a closable space at least partially filled with agricultural or horticultural products.

## Prior Art

The storage of perishable products, such as fruit and vegetables (produce), under low temperature, combined with high relative humidity and gaseous control is very important to suppress the metabolism (reduce the respiration rate) of agricultural and horticultural products, extending its postharvest life. Generally, the optimal storage temperature, oxygen ($O_2$) and carbon dioxide ($CO_2$) partial pressures are determined based on experimental results prior to the storage of the products. Nevertheless, the determination of these conditions are based on safety levels, so they are set above the minimum/maximum level tolerated by the fruit and vegetables and maintained over the period of storage. The above mentioned storage method is the so-called controlled atmosphere (CA).

Storage under CA results in a significant increase to the quality of maintaining perishable products, especially because the reduced temperature and $O_2$ in the storage rooms result in a suppressed respiration rate. Nevertheless, to further reduce the respiration rate, the storage under dynamic controlled atmosphere (DCA) has been employed. Storage under DCA allows changing the $O_2$ partial pressure in the storage room according to fruit and vegetable metabolism, being a reactive storage methodology. To employ such a technology, a system to determine the lowest oxygen limit (LOL) tolerated by the fruit in real time over the storage period is necessary.

Currently, there are three main methods to detect the LOL during the storage period disclosed by the prior art. The first method is based on ethanol production by the fruit (EP 2816890 B1). For this DCA technology, the $O_2$ partial pressure is reduced until an increase of ethanol is detected, using the ethanol concentration in the storage room/fruit as an indicator of anaerobic metabolism. The second method is based on chlorophyll fluorescence (WO 02/06795 A3), wherein the $O_2$ partial pressure is reduced until the chlorophyll of the fruit skin peaks, showing that the LOL is reached and the $O_2$ set point should be increased. The third method is based on respiratory quotient (RQ) measurements (US 2012/0097050 A1; EP 2816890 B1; EP 2547213 B1; EP 2918179 A1), which is the ratio between $CO_2$ production and $O_2$ uptake. RQ level is near 1.0 at aerobic conditions and higher than 1.0 when the $O_2$ is reduced below the LOL. Thus, monitoring the RQ allows the detection of the $O_2$ partial pressure where the fruit metabolism switches between aerobic and anaerobic. Among the three methods of DCA, the one based on chlorophyll fluorescence is the one most commonly used commercially. To employ this DCA technology, the installation of chlorophyll sensors inside the storage rooms is necessary, which increases the cost of storage rooms. Additionally, the LOL is monitored only for a limited number of samples for each storage room, and not for all fruits in the storage room. This can result faulty LOL determination and consequently determination of incorrect $O_2$ set-point levels, causing damage to the fruit.

Recently, the storage under DCA based on respiratory quotient (DCA - RQ) measurements is being used in some commercial storage rooms. The RQ can be measured directly in commercial storage rooms, but all machinery needs to be turned off during measurement (EP 2816890 B1). Nevertheless, when the storage room is not completely airtight, errors occur in the determination of the $O_2$ uptake, resulting in incorrect RQ determination (EP 2918179 A1; EP 2547213 B1). To solve this problem, two methods were developed; the first method is based on a mathematic estimation of the $O_2$ influx to correct the determination of $O_2$ uptake (EP 2547213 B1) and in the second method a box is installed inside the commercial storage room to determine the RQ in the box and estimate the correct RQ more accurately (US 2012/0097050 A1; EP 2918179 A1). Additionally, to be able to use the RQ method, the gas analysers need a precision of at least two decimal places, which is commonly not found in commercial storage rooms, so new, more expensive gas analysers need to be installed in commercial storage rooms to use this technology.

Further conventional systems and methods for controlling the atmosphere in a space are disclosed in WO 201 3/1 25944 A1, WO 2017/198793 A1 and WO 201 7/1 34288 A1.

## Disclosure of invention

It is thus an object of the present invention to provide an improved dynamic controlled atmosphere method for fruit and vegetable storage rooms and a corresponding storage apparatus. In particular, a cheaper and more efficient dynamic controlled atmosphere process is to be achieved.

These objects are achieved by a method and a storage apparatus having the features of the independent claims.

Thus, a first aspect of the invention relates to a method for controlling the atmosphere in a closable space at least partially filled with agricultural or horticultural products, wherein a carbon dioxide partial pressure is periodically measured inside the closable space, wherein an optimal oxygen partial pressure and/or an optimal temperature for storing the agricultural or horticultural products is set inside the space, and wherein the optimal oxygen partial pressure and/or the optimal temperature, is determined and set based on solely the measurements of the carbon dioxide partial pressure.

In a mixture of gases, each constituent gas has a partial pressure which is the notional pressure of that constituent gas if it alone occupied the entire volume of the original mixture at the same temperature. The total pressure of an ideal gas mixture is the sum of the partial pressures of the gases in the mixture. The partial pressure for each gas is proportional to the concentration of the respective gas. Preferably the concentration of a gas is defined as $n/V = P/RT$, where P, V and T are the pressure, volume and absolute temperature; n is the number of moles of gas; and R is the ideal gas constant.

In contrast to the standard DCA methods for storage rooms, wherein an ethanol concentration, a chlorophyll fluorescence or a respiratory quotient is used to determine optimal oxygen levels for storage of agricultural or horticultural products, in the DCA method according to the invention, in particular for use in a storage apparatus according to the invention, the optimal oxygen level and optimal temperatures for storage of agricultural or horticultural products is determined based on measuring solely carbon dioxide concentration.

The optimal oxygen partial pressure and/or an optimal temperature for storing the agricultural or horticultural products is the oxygen partial pressure and/or the temperature at which the produce can be stored for as long as possible, less damages (physiological disorders) or rot of the produce.

Determined based on measurements of solely a carbon dioxide partial pressure, means that the only value that is measured while determining the optimal oxygen partial pressure and/or an optimal temperature is the carbon dioxide partial pressure, more preferably the carbon dioxide partial pressure is the only measurement value used to determine an optimal oxygen partial pressure or optimal oxygen set-point.

The closable space is preferably a container or a storage room, which can be closed, preferably with a door.

The essential advantage of the present invention is its reliability without the extra efforts needed in the prior art and without needing new, more expensive gas analysers. The cost is reduced because no additional devices are need compared to standard CA storage rooms. The DCA method according to the invention results in optimal oxygen and temperature setpoints, without needing any manual interpretation of measurements. Because of temperature optimization, damage to the produce due to low or high temperature are avoided, reducing losses. Due to adapting the oxygen concentration and temperature to an optimal level, it is possible to save electrical energy. The method according to the invention induces anaerobic metabolism of the produce at safety levels, resulting in the production of acetaldehyde and ethanol compounds that suppress the ethylene biosynthesis and increases the aroma of the produce and prolong the shelf life of the produce. Because the method according to the invention monitors all produce in a storage room and not only a few samples, as in chlorophyll fluorescence measurements or some DCA-RQ methods, the method according to the invention is more precise. Because the method according to the invention results in low oxygen and ethanol accumulation, the occurrence of superficial scald and others physiological disorders on produce are avoided.

Preferably the periodic measurements of the carbon dioxide partial pressure are in each case measured for a predetermined period of time. The predetermined period of time for measuring the carbon dioxide partial pressure is preferably between 3 hours and 24 hours, more preferably between 5 hours and 16 hours, and more preferably between 10 hours and 18 hours. Repeated measurements and increased measurement time increase the accuracy of the carbon dioxide partial pressure measurement.

Preferably an oxygen partial pressure is maintained at a range of $\pm 0.1$ kPa between at least two measurements of the carbon dioxide partial pressure. Idealistically and to increase the precision of the measured results, the oxygen partial pressure should not change between measurements of the carbon dioxide partial pressure.

Preferably a CO2-scrubber is deactivated between at least two measurements of the carbon dioxide partial pressure. Idealistically only the agricultural or horticultural products stored in the space should influence the carbon dioxide partial pressure between measurements and so preferably a CO2-scrubber, which absorbs carbon dioxide and removes it from the space, is turned off or deactivated between at least two measurements of the carbon dioxide partial pressure.

Preferably no measurement of an oxygen concentration is performed to determine the optimal oxygen and temperature set points.

Preferably the optimal oxygen partial pressure is determined using a currently / previously set oxygen partial pressure and a rate of carbon dioxide partial pressure or concentration change. Meaning the only measurements used for the determination of the optimal oxygen partial pressure are the carbon dioxide partial pressure measurements used to determine the rate of carbon dioxide partial pressure or concentration change.

Preferably the optimal temperature is determined using a currently / previously set temperature and a rate of carbon dioxide partial pressure or concentration change. Meaning the only measurements used for the determination of the optimal temperature are the carbon dioxide partial pressure measurements used to determine the rate of carbon dioxide partial pressure or concentration change.

Preferably the method according to the invention comprises the following steps:

a) Setting start values for an oxygen partial pressure, a carbon dioxide partial pressure and a temperature in the space,
b) Maintaining the values set for the oxygen partial pressure, the carbon dioxide partial pressure and the temperature in the space for a first predetermined period of time,

c) Measuring a first carbon dioxide partial pressure inside the space,

d) Deactivating a CO2-scrubber for a second predetermined period of time,

e) Measuring a second carbon dioxide partial pressure inside the space,

f) Determine a change in carbon dioxide partial pressure inside the space based on the first and second carbon dioxide partial pressure measurements,

Determining and setting an optimal oxygen partial pressure and/or an optimal temperature for storing the agricultural or horticultural products based on the change in carbon dioxide partial pressure and the previously set oxygen partial pressure and / or temperature inside the space.

Preferably steps b) to f) can be repeated as often as needed, more preferably the steps b) to f) are continuously repeated.

Preferably the first predetermined period of time is between 1 day and 15 days, more preferably between 2 days and 7 days, more preferably between 2 days and 5 days, more preferably between 3 days and 4 days.

Preferably the second predetermined period of time is between 1 hour and 48 hours, more preferably between 3 hours and 24 hours, more preferably between 5 hours and 16 hours, more preferably between 10 hours and 18 hours.

Preferably the optimal oxygen partial pressure for storing the agricultural or horticultural products is determined or calculated using

$$P_{new} = \left\{ \left| \left( P_{old} - \left( \frac{d[CO2]}{dt} * f_{CO2} \right) \right) \right| + \left( \frac{\left( \frac{d[CO2]}{dt} \right) * f_{CO2}}{AMF} \right) \right\} + SV,$$

wherein $\frac{d[CO2]}{dt}$ is a rate of carbon dioxide partial pressure or concentration change determined based on the first and second carbon dioxide partial pressure measurements. $f_{CO2}$ is a variable dependent on the carbon dioxide partial pressure or concentration change in the space, wherein $f_{CO2}$ varies between 1 hour and 24 hours. This factor corrects the CO2 release rate of the produce as a function of CO2 partial pressure adopted in the storage room (Set by the user). In other words, it corrects the CO2 release of the produce at the actual set point of CO2 to the level that the method was developed. This factor varies only with the $CO_2$ set point used in the chamber (the $CO_2$ set point is set by the user at the start of the method) and can be determined using the table 1 below. For example, if we set the $CO_2$ at 1.2 kPa the $fCO_2$ will be 13.2 h.

Table 1. Correlation between the original $CO_2$ set point and $fCO_2$

| Set point CO2 (kPa) | $fCO_2$ (h) |
|---|---|
| 0.4 | 8 |
| 0.5 | 9 |
| 0.6 | 10 |
| 0.7 | 11 |
| 0.8 | 12 |
| 0.9 | 12.3 |
| 1 | 12.6 |
| 1.1 | 12.9 |
| 1.2 | 13.2 |
| 1.3 | 13.5 |
| 1.4 | 13.8 |
| 1.5 | 14.1 |
| 1.6 | 14.4 |
| 1.7 | 14.7 |
| 1.8 | 15 |
| 1.9 | 16 |

(continued)

| Set point CO2 (kPa) | $fCO_2$ (h) |
| --- | --- |
| 2 | 17 |
| 2.1 | 18.5 |
| 2.2 | 20 |
| 2.3 | 22 |

*AMF* is an anaerobic metabolism factor, which varies between 1 and 25. This factor has the function to induce a little anaerobic metabolism in produce over the storage period, so the higher the factor the higher the anaerobic metabolism and consequently the ethanol production by the produce. It varies among cultivars, because each cultivar has its own tolerance to low oxygen. Thus, for cultivars that are sensitive to low oxygen the factor is low and, for less sensitive cultivars, it is higher. This factor can be determined by measuring the $CO_2$ release rate of the produce. The optimal AMF can be determined by using the method according to the invention with randomly chosen AMF values and then plotting the average carbon dioxide change (carbon dioxide release rate) as a function of each randomly chosen AMF value. To choose the random values of AMF it is necessary to know if the produce cultivar tolerates low or high anaerobic metabolism. If it tolerates a low amount of anaerobic metabolism you should choose AMF values close to 1, if it tolerates a high amount of anaerobic metabolism you should choose AMF values close to 25. For example, 'Gala' apples store better with low anaerobic metabolism so a random AMF values close to 1 should be chosen (the information that 'Gala' apples store better with low anaerobic metabolism are reported in the literature). The correct AMF value is then determined by fitting the points (CO2 release rate as a function of the chosen AMF values) and determining the minimum of the curve. The minimum of the fitted curve is the correct AMF value for the method according to the invention. The determination of AMF has to be done once for the produce to be stored.

*SV* is a safety factor, which varies between 0 kPa and 2 kPa. It acts as a buffer. It determines an overset of the oxygen set point. For example, if the optimum oxygen partial pressure is 0.5 kPa, and we apply an SV of 0.2 kPa, the novel oxygen set point will be 0.7 kPa (0.5 + 0.2 = 0.7). This factor can be applied to avoid excessive low oxygen, and create a safer storage condition. The SV is defined by the user. This factor is not based on any measurements. The person skilled in the art knows how to define how much the overset of the oxygen is to be set for different produce types and cultivars, as each produce tolerates different minimum oxygen concentrations before being damaged.

$P_{old}$ is the previously set oxygen partial pressure and $P_{new}$ is the newly determined optimal oxygen partial pressure. The anaerobic metabolism factor is dependent on the produce type and cultivar, it relates to how tolerable the fruit is to low oxygen. This equation shows that the only measurements needed to determine the optimal oxygen partial pressure for storing the agricultural or horticultural products are measurements of the carbon dioxide partial pressure or concentration to determine the rate of carbon dioxide partial pressure or change in concentration. All other inputs are known values.

Preferably the optimal temperature for storing the agricultural or horticultural products is determined or calculated using

$$T_{new} = \left( \frac{\beta - \left( \frac{d[CO2]}{dt} * f_{CO2} \right)}{\left( \frac{CTF}{f_{CO2}} \right)} \right) + T_{old},$$

wherein $\beta$ is an optimal carbon dioxide release value, which varies between 0.1 kPa and 2.0 kPa. The factor $\beta$ describes the optimal $CO_2$ release as a response to the temperature variation of the storage room. The $CO_2$ release rate of produce decreases as the temperature is lowered, until a determined temperature, at which the $CO_2$ release rate does not change significantly with the temperature further lowering, at this $CO_2$ release rate the β factor can be determined. To determine β the produce is put into a room which is then hermetically sealed. Thereafter the $CO_2$ release rate as a function of temperature variation is measured. The lowest $CO_2$ release rate is then multiplied by $f_{CO2}$ and the obtained value is considered the $\beta$. The relationship between produce CO2 release rate and temperature is common knowledge and the determination is not part of the inventive method and is done once before storage.

*CTF* is a cultivar temperature factor, which varies between 1 (kPa * h)/°C and 25 (kPa * h)/°C. The cultivar temperature factor is dependent on the type of produce and the cultivar of the produce. It describes the CO2 production of produce as a function of temperature. The CTF is a factor that determines how much the temperature can be varied as a response to $CO_2$ release. Thus, the lower the $CO_2$ release rate with the temperature variation the lower is CTF. This factor can be determined based on table 2 and/or the experience of the user (based on literature data about low and high temperature tolerance of a determined cultivar). The $CO_2$ release rate given in the table 2 is the natural $CO_2$ release rate of the produce at the beginning of storage and is known to the person skilled in the art or is determined as an average of the $CO_2$ release rate over a period of time, e.g. one week.

Table 2: Correlation between produce $CO_2$ release rate and CTF

| CO2 release rate (kPa / h) | *CTF* (kPa * h)/°C) |
|---|---|
| 0-0.1 | 1 |
| 0.11 - 0.2 | 2 |
| 0.21 - 0.3 | 3 |
| 0.31 - 0.4 | 4 |
| 0.41 - 0.5 | 5 |
| 0.51 - 0.6 | 5 |
| 0.61 - 0.7 | 6 |
| 0.71 - 0.8 | 7 |
| 0.81 - 0.9 | 8 |
| 0.91 - 1.0 | 9 |
| 1.01 - 1.1 | 10 |
| 1.11 - 1.2 | 11 |
| 1.21 - 1.3 | 12 |
| 1.31 - 1.4 | 13 |
| 1.41 - 1.5 | 14 |
| 1.51 - 1.6 | 15 |
| 1.61 - 1.7 | 16 |
| 1.71 - 1.8 | 17 |
| 1.81 - 1.9 | 18 |
| 1.91 - 2.0 | 19 |
| 2.01 - 2.1 | 20 |
| 2.11 - 2.2 | 21 |
| 2.21 - 2.3 | 22 |
| 2.31 - 2.4 | 23 |
| 2.41 - 2.5 | 24 |
| >2.5 | 25 |

Similar to the determination of the optimal oxygen partial pressure, $T_{old}$ is the previously set temperature in the storage room and $T_{new}$ is the newly determined optimal temperature. As with the determination of the optimal oxygen partial pressure, the optimal temperature also only needs measurements of the carbon dioxide partial pressure or concentration to determine the rate of carbon dioxide partial pressure or concentration change.

Preferably the carbon dioxide partial pressure or concentration is measured using a gas analyser. As stated above a standard gas analyser used for CA chambers is sufficient.

Alternatively preferably the carbon dioxide partial pressure is estimated or determined based on the running time and the efficiency of a CO2-scrubber.

Another aspect of the invention relates to a storage apparatus for controlling the atmosphere in a closable space at least partially filled with agricultural or horticultural products.

The apparatus according to the invention comprises:

a) a gas analyser,

b) a CO2-scrubber,
c) a nitrogen production system,
d) an atmosphere control system
e) an oxygen injection system,
f) a temperature control system,

wherein the apparatus is configured to perform the method according to the invention.

A gas analyser is preferably an apparatus for measuring the concentration or partial pressure of a gas in a closed space. A carbon dioxide (CO2) scrubber is a piece of equipment that absorbs carbon dioxide (CO2). The CO2-scrubber can be actively running, wherein it absorbs CO2 while it actively runs. A nitrogen production system is preferably a nitrogen-generating system or a nitrogen gas bottle. The control system controls the other features of the system. The control system can preferably be embodied by a computer or a microcontroller. An oxygen injection system is an apparatus to control the intake of oxygen into the storage room. The oxygen injection system can keep the flow of air into the storage room constant or adapt the intake according to commands of the control system. A temperature control system is an apparatus for controlling the temperature inside the storage room. The temperature control system can automatically keep the temperature at one set value or vary the temperature depending on commands of the control system. Preferably the temperature control system includes temperatures sensors and a ventilation system, including ventilation fans.

A further aspect of the invention relates to a computer program product with computer-executable program code for carrying out the method according to the invention when the program is executed on an apparatus.

Further preferred embodiments of the invention result from the remaining features stated in the dependent claims.

The various embodiments and aspects of the invention mentioned in this application are, unless stated otherwise in the individual case, advantageously combinable with one another. In particular, representations and descriptions of preferred embodiments and embodiments of the method are always transferable to the storage apparatus and vice versa.

## Brief description of drawings

The invention is explained in more detail below, using an example and the drawings that go with it. The figures show:

Fig. 1    a sample relation between the oxygen concentration in a storage room and the carbon dioxide produced in "Galaxy" apples,

Fig. 2    an example of one embodiment of the method according to the invention, and

Fig. 3    an example of one storage room according to the invention,

Fig. 4    a sample graph for "Gala" apples, showing the change of optimal temperature and optimal oxygen partial pressure over a storage period of 6 months.

## Detailed description of the invention

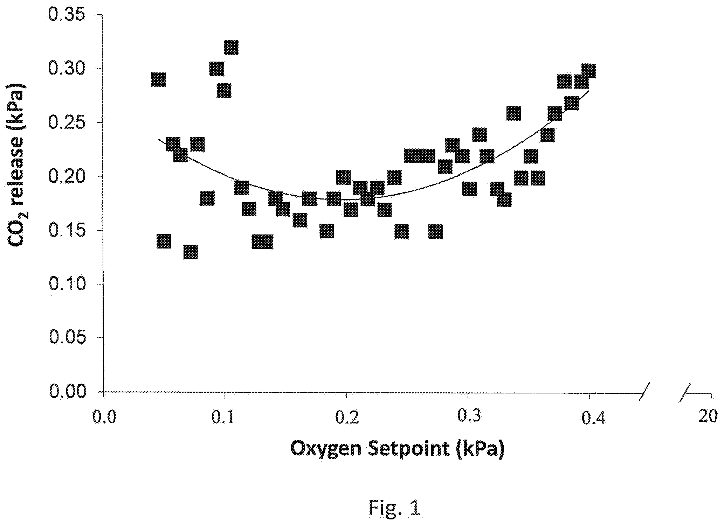

In view of the prior art, almost all DCA technologies need additional equipment when used in commercial storage rooms. The method and apparatus according to the invention do not need any additional devices or sensors in standard CA/ULO storage rooms. The DCA method according to the invention is based only on carbon dioxide production, and it is not necessary to determine the oxygen uptake to estimate the optimal oxygen partial pressure over the storage period of the produce. This is possible because one of the most important indicators of fruit metabolism during storage is carbon dioxide release. The carbon dioxide release decreases as the oxygen is lowered in the storage room, until the anaerobic compensation point (ACP) is achieved. The carbon dioxide release increases sharply if the oxygen partial pressure is lowered below this level (Figure 1). If the carbon dioxide released in response to the oxygen lowering is taken into account, the correct optimal oxygen partial pressure over the storage period can be determined by the carbon dioxide released in the storage room with the aid of the method according to the invention. The carbon dioxide release measurement in the storage room can be performed with the same gas analyser used to control the atmosphere in a regular static CA storage room. In addition, the air tightness of commercially available storage rooms has negligible influence on the quantification of the carbon dioxide release. The method according to the invention also allows monitoring of all produce in the storage room, which results in a more realistic estimation of the optimal oxygen partial pressure over the storage period.

The DCA method according to the invention estimates the optimal oxygen partial pressure without needing any information about the adequate RQ for each cultivar, species, maturity stage, etc. The DCA method according to the invention sets the oxygen based on fruit metabolism and not on a predetermined RQ, as is proposed by the prior art. Thus, the method according to the invention is RQ-free, i.e. there is no need to calculate and know anything about the RQ. This is a big advantage, because the determination of the correct RQ for each cultivar, species and maturity stage requires long-term experiments (several years). Thus, the DCA method according to the invention adapts the oxygen partial pressure of each cultivar, species, and maturity stage automatically; being a self-learning DCA system (an algorithm adapts the fruit respiration to a minimal/optimal level). Additionally, the DCA method according to the invention is completely autonomous, interpretations are not necessary; the algorithm determines the optimal oxygen partial pressure.

A second embodiment of the DCA method according to the invention proposes the variation of two parameters in the storage room, a two-dimensional DCA. Measuring only the carbon dioxide release of the produce, the method according to the invention is able to set the optimal temperature in addition to the optimal oxygen partial pressure. Using this two-dimensional DCA method, it is possible to continuously change the optimal oxygen partial pressure and the optimal temperature over the storage period with a low energy usage and maintaining a high quality. This is very important for a practical application, because one of the highest cost factors for storage rooms is the electrical energy of refrigeration systems. So, if the storage temperature is optimized to fruit metabolism (as is disclosed for the method according to the invention), it is possible to increase the storage temperature and move towards a "green" storage facility (environmental friendly). The temperature also has an effect on the optimal oxygen partial pressure and the oxygen partial pressure has an effect on the optimal temperature, the compromise of these two factors is obtained by the employment of the method according to the invention.

In a third embodiment of the method according to the invention, only an optimal temperature is determined. This is possible by periodically and/or continuously measuring the carbon dioxide release of the produce, which is the input of an algorithm that determines the optimal storage temperature. The optimal temperature is periodically or continuously changed over the storage period, dependent on the cultivar and species. By employing the method according to the invention, low and high temperature damage of fruit is avoided, reducing loss over the storage period due to incorrect temperature.

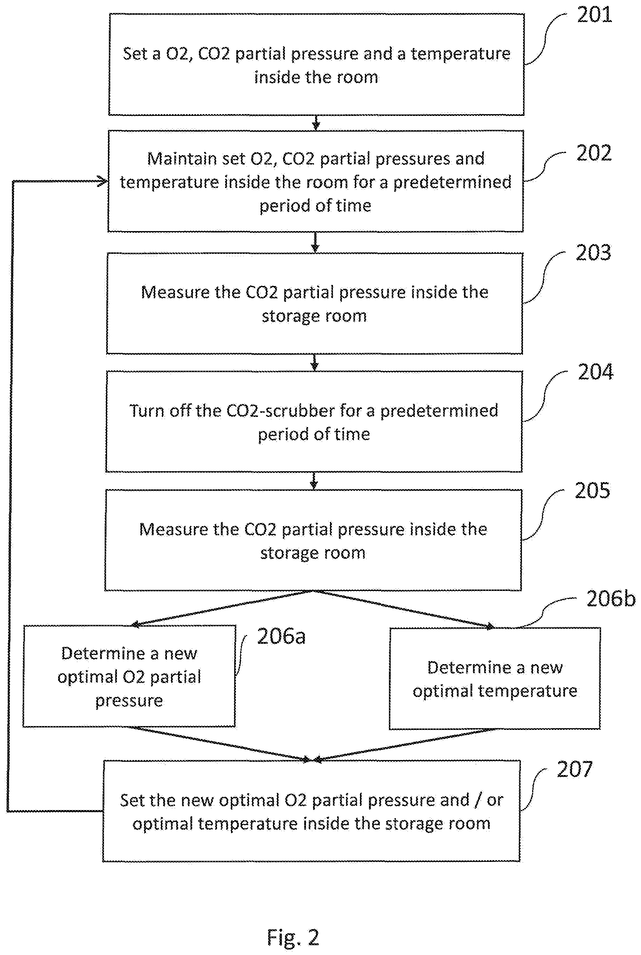

Figure 2 describes one example for an embodiment of the method according to the invention. At the start of the storage period, start values for the carbon dioxide partial pressure, the oxygen partial pressure and the temperature are set in step 201. These start values are dependent on the type of produce and cultivar. Examples are given in Table 3 and Table 4.

Table 3: Sample start values for $CO_2$ and $O_2$ partial pressure.

| Fruit type | $CO_2$ | $O_2$ |
| --- | --- | --- |
| 'Gala' apples | 1.2 - 1.6 kPa | 0.6 kPa |
| 'Fuji' apples | < 1.0 kPa | 0.7 kPa |
| 'Elstar' apples | 1.2 - 1.6 kPa | 0.7 kPa |
| 'Nicoter ' apples | < 1.0 kPa | 0.8 kPa |

Table 4: Sample start values for temperature.

| Fruit type | Temperature |
| --- | --- |
| 'Gala' apples | 0.5 - 1.0 °C |
| 'Fuji' apples | 0.0 - 0.5 °C |
| 'Elstar' apples | 0.0 - 0.5 °C |
| 'Nicoter ' apples | 1.0 - 2.0 °C |

The previously set storage conditions are maintained in step 202 for three days to adapt the fruit metabolism to the environment. After this period the carbon dioxide partial pressure is measured inside the storage room using a gas analyser and recorded together with the time of the measurement and the initial value for the oxygen set-point in step 203. Afterwards a CO2-scrubber, which runs from the start to maintain a predetermined set-point as given in table 3, is turned off for 6 to 12 hours while oxygen is injected to maintained the oxygen partial pressure in a range of ± 0.1 kPa in step 204. Then in step 205 the carbon dioxide partial pressure is measured inside the storage room a second time using a gas analyser and is recorded together with the time of the measurement and the initial value for the oxygen set-point. Afterwards the CO2-scrubber is turned back on. In step 206a and/or in step 206b the optimal oxygen partial pressure and/or the optimal temperature are determined based on the recorded values of steps 203 and 205. In step 207 the determined optimal oxygen partial pressure and / or the optimal temperature are set inside the storage room. The steps 202 to 207 are repeated over the storage period.

In an alternate aspect of the method according to the invention, the CO2-scrubber is not turned off during the storage period. In this alternate aspect, steps 201 and 202 stay the same, but instead of steps 203 to 205, the actual running time of the CO2-scrubber is monitored and documented. For example, during a storage period of 7 days the CO2-scrubber actively runs for 7 hours. If the time the CO2-scrubber runs is known together with the efficiency of the CO2-scrubber, it is possible to estimate the carbon dioxide release. Using the estimated carbon dioxide release together with the running time of the CO2-scrubber, it is then possible to proceed to steps 206a and / or 206b and determine the optimal oxygen partial pressure and / or optimal temperature.

In a further alternate aspect of the invention, compared to the previous aspect, the carbon dioxide release is estimated based on the time between the times the CO2-scrubber absorbed carbon dioxide. If the time between carbon dioxide absorption and the hysteresis of the carbon dioxide is known, the carbon dioxide release can be calculated.

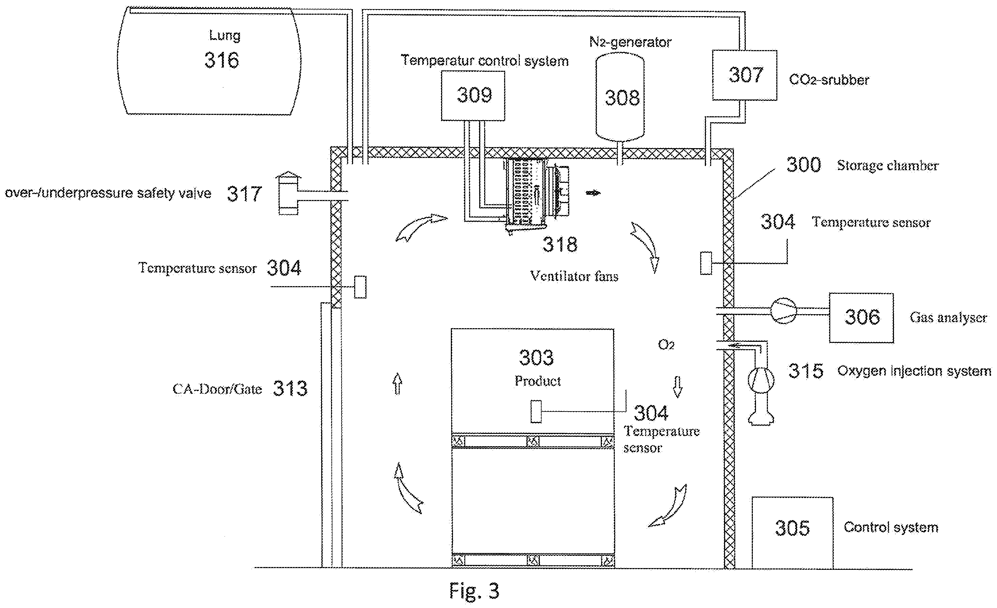

Figure 3 shows an example of one storage room 300 according to the invention configured to perform the method according to the invention with goods 303 stored inside. The storage room 300 is designed gas-tight in the sense of a so-called CA/ULO quality, so that only a very small gas exchange takes place between the interior of the storage room 300 and an exterior. This is ensured by the fact that the storage room 300 is loaded via a CA-Door 313 with the goods 303, e.g. fruits. Only an optimal storage of fruits and vegetables with absolutely uniform and reproducible gas concentrations ensures uniform fruit quality or permanently fresh fruits. This is ensured with a CA-Door 313, which closes, for example, according to the principle of static contact force. The goods 303 are arranged for example on a so-called port palette, bins or storage boxes. The room volume of a preferred storage room 300 is usually between 200 $m^3$ and 1,700 $m^3$, depending on the type of chamber. However, the dimensions can be adapted to a desired amount of the goods 303 and structural conditions. Based on apples as fruits, which are packed in a bin of approximately 300 kg, at full capacity in a room of 200 $m^3$, will be put 200 bins of 300 kg each. This results in a total volume of 60,000 kg of apples per standard storage room 300. The bin quantity and amount of fruits may vary.

The storage room 300 has a gas analyser 306, and temperature sensors 304 placed inside the chamber. The gas analyser 306 is configured and optimised to measure oxygen and carbon dioxide concentrations or carbon dioxide partial pressure, but only carbon dioxide concentrations is used by the new method to determine the optimal oxygen set-point. The storage room 300 is also connected to an oxygen injection system 315, for example as a fresh air supply, and a nitrogen production system 308. These can release an amount of gas defined by a control system 305 for regulating the atmosphere within the storage room 300. In addition, the storage room 300 is connected to a carbon dioxide scrubber 307, which enables a removal of carbon dioxide. In order to control the temperature inside the storage room 300, the chamber has a temperature control system 309, which preferably comprises a heat exchanger in combination with ventilation fans 318 connected for example to refrigeration and heater system. The temperature sensors 304 are connected to the temperature control system 309. The adjusting means and devices 306, 307, 308, 309 and 315 suitable for influencing the atmosphere within the storage room 300 are connected and controlled by control system 305. The control system 305 controls the other means and devices 304, 306, 307, 308, 309 and 315 and determines the optimal oxygen partial pressure and / or optimal temperature based on the carbon dioxide concentration measurements of the gas analyser 306. The chamber 300 performs the method as previously disclosed to adjust the oxygen concentration and / or the temperature to levels which are optimal for long term storage of the goods. The storage room 300 also has an over-/ underpressure safety valve 317 which is set up to compensate an over- or under-pressure. Alternatively, or additionally, the storage room 300 is fluidly connected to a so-called lung 316, in which excess gas can be released or from which gas can flow back from. Thus, certain pressure fluctuations in the storage room 300 can be compensated.

In order to be able to keep this atmosphere constant over a longer period of time, CA/ULO technology is preferably used.

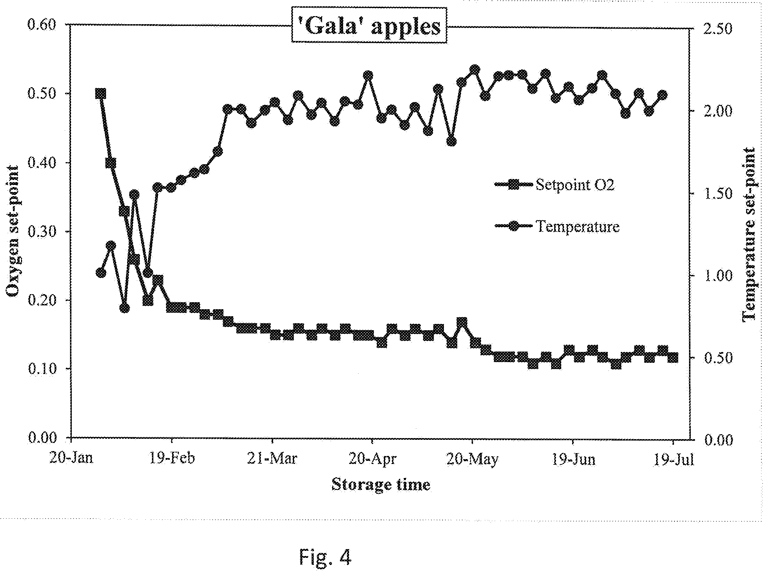

Figure 4 shows a sample graph for the cultivar "Gala" apples, showing the change of optimal temperature and optimal oxygen partial pressure over a storage period of 6 months while using the method according to the invention.

The method according to the invention dynamically determines the optimum storage target value for oxygen and the warmest possible temperature at certain intervals. These optimum target values can change dynamically over the storage period. The advantage of this method is that the lowest possible storage oxygen set-point is determined from the start of storage under a controlled atmosphere. This is usually higher at the beginning, since the fruit is more sensitive to oxygen at the beginning of storage. With the duration of storage, the optimum oxygen set-point usually changes downwards towards a limit. The optimum oxygen target value determined can also rise again during the storage period.

According to the method according to the invention, the oxygen partial pressure is decreased slowly over the storage period (as showed in Figure 4), in order to avoid excessive anaerobic metabolism, i.e., the fruit are submitted to slight low oxygen stress only. This fact induces the fruit to adapt to low oxygen partial pressures, without damages due to low oxygen stress. Additionally, the slight low oxygen stress induces a production of acetaldehyde and ethanol, which blocks the ethylene production and reaction, decreasing fruit ripening and, consequently, keeping fruit quality as high as possible. The higher ethanol production also increases the aroma production of fruit, resulting in fruit with higher organoleptic quality.

The optimum storage temperature is determined from the point of view of being as warm as possible without obtaining significant differences in the storage quality of the fruit. This means that considerable electrical energy can be saved for cooling. Each 0.1 K temperature increase for the temperature set-point of the storage room reduces energy consumption and storage costs.

Reference list

| | |
|---|---|
| 300 | Storage room |
| 303 | Storage goods / produce |
| 304 | Temperature sensor |
| 305 | Atmosphere control system |
| 306 | Gas analyser |
| 307 | CO2-scrubber |
| 308 | N2-generator |
| 309 | Temperature control system |
| 313 | Door/gate |
| 315 | Oxygen injection system |
| 316 | Lung |
| 317 | Over- / underpressure safety valve |
| 318 | Ventilation fans |

**Claims**

1.  A method for controlling the atmosphere in a closable space at least partially filled with agricultural or horticultural products,

    wherein a carbon dioxide partial pressure is periodically measured inside the closable space,
    wherein an optimal oxygen partial pressure ($P_{new}$) and/or an optimal temperature ($T_{new}$) for storing the agricultural or horticultural products is set inside the space, **characterised in that**
    the optimal oxygen partial pressure ($P_{new}$) and/or the optimal temperature ($T_{new}$), is determined and set based on solely the measurements of the carbon dioxide partial pressure,
    wherein the optimal oxygen partial pressure ($P_{new}$) is determined by using the following equation:

    $$P_{new} = \left\{ \left| \left( P_{old} - \left( \frac{d[CO2]}{dt} * f_{CO2} \right) \right) \right| + \left( \frac{\left( \frac{d[CO2]}{dt} \right) * f_{CO2}}{AMF} \right) \right\} + SV,$$

    wherein $P_{old}$ is a currently set oxygen partial pressure,
    $\frac{d[CO2]}{dt}$ is a rate of carbon dioxide partial pressure or concentration change, $f_{CO2}$ is a variable dependent on the carbon dioxide partial pressure or concentration change in the space, wherein $f_{CO2}$ varies between 1 h and 24 h, $AMF$ is a anaerobic metabolism factor, which varies between 1 and 25 and $SV$ is a safety value, which varies between 0 kPa and 2 kPa,
    wherein the optimal temperature ($T_{new}$) is determined by using the following equation:

    $$T_{new} = \left( \frac{\beta - \left( \frac{d[CO2]}{dt} * f_{CO2} \right)}{\left( \frac{CTF}{f_{CO2}} \right)} \right) + T_{old}$$

    , wherein $\beta$ is an optimal carbon dioxide release value that varies between 0.1 kPa and 2.0 kPa, $T_{old}$ is a currently set temperature and $CTF$ is a cultivar temperature factor, which varies between 1 (kPa * h)/°C and 25 (kPa * h)/°C.

2.  The method according to claim 1, wherein the periodic measurements of the carbon dioxide partial pressure are in each case measured for a predetermined period of time.

3.  The method according to one of the previous claims, wherein an oxygen partial pressure ($P_{old}$) is maintained at a range

of $\pm$ 0.1 kPa between at least two measurements of the carbon dioxide partial pressure.

4. The method according to one of the previous claims, wherein a CO2-scrubber is deactivated between at least two measurements of the carbon dioxide partial pressure.

5. The method according to one of the previous claims, wherein the method comprises the steps:

   a) Setting start values for an oxygen partial pressure, a carbon dioxide partial pressure and a temperature in the space,
   b) Maintaining the set values for the oxygen partial pressure ($P_{old}$), carbon dioxide partial pressure and temperature ($T_{old}$) in the space for a first predetermined period of time,
   c) Measuring a first carbon dioxide partial pressure inside the space,
   d) Deactivating a CO2-scrubber for a second predetermined period of time,
   e) Measuring a second carbon dioxide partial pressure inside the space,

   f) Determine a change in carbon dioxide partial pressure ($\frac{d[CO2]}{dt}$) inside the space based on the first and second carbon dioxide partial pressure measurements,
   g) Determining and setting the optimal oxygen partial pressure ($P_{new}$) and/or the optimal temperature ($T_{new}$) based on the change in carbon dioxide partial pressure and the previously set oxygen partial pressure ($P_{old}$) and/or temperature ($T_{old}$) inside the space.

6. The method according to claim 5, wherein the first predetermined period of time is between 1 day and 15 days.

7. The method according to one of claims 5 or 6, wherein the second predetermined period of time is between 1 and 48 hours.

8. The method according to one of the previous claims, wherein a gas analyser measures the carbon dioxide partial pressure.

9. The method according to one of the previous claims, wherein a carbon dioxide partial pressure is determined based on a running time of a CO2-scrubber and the efficiency of the CO2-scrubber.

10. An apparatus for controlling the atmosphere in a closable space at least partially filled with agricultural or horticultural products, comprising:

    a) a gas analyser (306),
    b) a CO2-scrubber (307)
    c) a nitrogen production system (308),
    d) a control system (305),
    e) an oxygen injection system (315),
    f) a temperature control system (309),

    wherein the apparatus is configured to perform the method according to one of the previous claims.

11. A computer program product with computer-executable program code for carrying out the method according to one of claims 1 to 9 when the program is executed on an apparatus.


**Patentansprüche**

1. Verfahren zum Kontrollieren der Atmosphäre in einem verschließbaren Raum, der zumindest teilweise mit landwirtschaftlichen oder gartenbaulichen Produkten gefüllt ist, wobei periodisch ein Kohlendioxidpartialdruck im Inneren des verschließbaren Raums gemessen wird,

   wobei ein optimaler Sauerstoffpartialdruck ($P_{new}$) und/oder eine optimale Temperatur ($T_{new}$) zum Lagern der landwirtschaftlichen oder gartenbaulichen Produkte im Inneren des Raums eingestellt wird,
   **dadurch gekennzeichnet, dass**

der optimale Sauerstoffpartialdruck ($P_{new}$) und/oder die optimale Temperatur ($T_{new}$) allein auf der Grundlage der Kohlendioxidpartialdruckmessungen bestimmt und eingestellt wird, wobei der optimale Sauerstoffpartialdruck ($P_{new}$) anhand der folgenden Gleichung bestimmt wird:

$$P_{new} = \left\{ \left| \left( P_{old} - \left( \frac{d[CO2]}{dt} * f_{CO2} \right) \right) \right| + \left( \frac{\left( \frac{d[CO2]}{dt} \right) * f_{CO2}}{AMF} \right) \right\} + SV,$$

wobei
$P_{old}$ ein aktuell eingestellter Sauerstoffpartialdruck ist,

$\frac{d[CO2]}{dt}$ eine Rate der Kohlendioxidpartialdruck- oder -konzentrationsänderung ist, $f_{CO2}$ eine von der Kohlendioxidpartialdruck- oder der -konzentrationsänderung in dem Raum abhängige Variable ist, wobei $f_{CO2}$ zwischen 1 h und 24 h variiert, *AMF* ein Faktor des anaeroben Stoffwechsels ist, der zwischen 1 und 25 variiert, und *SV* ein Sicherheitswert ist, der zwischen 0 kPa und 2 kPa variiert,

wobei die optimale Temperatur ($T_{new}$) anhand der folgenden Gleichung bestimmt wird:

$$T_{new} = \left( \frac{\beta - \left( \frac{d[CO2]}{dt} * f_{CO2} \right)}{\left( \frac{CTF}{f_{CO2}} \right)} \right) + T_{old}$$

, wobei $\beta$ ein optimaler Kohlenstoffdioxidfreisetzungswert ist, der zwischen 0,1 kPa und 2,0 kPa variiert, $T_{old}$ eine aktuell eingestellte Temperatur ist und *CTF* ein Kultursorten-Temperaturfaktor ist, der zwischen 1 (kPa * h)/°C und 25 (kPa * h)/°C variiert.

2. Verfahren nach Anspruch 1, wobei die periodischen Messungen des Kohlendioxidpartialdrucks jeweils über einen vorbestimmten Zeitraum gemessen werden.

3. Verfahren nach einem der vorangehenden Ansprüche, wobei ein Sauerstoffpartialdruck ($P_{old}$) zwischen zumindest zwei Messungen des Kohlendioxidpartialdrucks in einem Bereich von ± 0,1 kPa gehalten wird.

4. Verfahren nach einem der vorangehenden Ansprüche, wobei ein CO2-Wäscher zwischen zumindest zwei Messungen des Kohlendioxidpartialdrucks deaktiviert wird.

5. Verfahren nach einem der vorangehenden Ansprüche, wobei das Verfahren die folgenden Schritte umfasst:

   a) Einstellen von Anfangswerten für einen Sauerstoffpartialdruck, einen Kohlendioxidpartialdruck und eine Temperatur in dem Raum,
   b) Halten der eingestellten Werte für den Sauerstoffpartialdruck ($P_{old}$), den Kohlendioxidpartialdruck und die Temperatur ($T_{old}$) in dem Raum über einen ersten vorbestimmten Zeitraum,
   c) Messen eines ersten Kohlendioxidpartialdrucks im Inneren des Raums,
   d) Deaktivieren eines CO2-Wäschers über einen zweiten vorbestimmten Zeitraum,
   e) Messen eines zweiten Kohlendioxidpartialdrucks im Inneren des Raums,

   f) Bestimmen einer Änderung des Kohlendioxidpartialdrucks ($\frac{d[CO2]}{dt}$) im Inneren des Raums auf der Grundlage der ersten und der zweiten Kohlendioxidpartialdruckmessung,
   g) Bestimmen und Einstellen des optimalen Sauerstoffpartialdrucks ($P_{new}$) und/oder der optimalen Temperatur ($T_{new}$) auf der Grundlage der Änderung des Kohlendioxidpartialdrucks und des zuvor eingestellten Sauerstoffpartialdrucks ($P_{old}$) und/oder der Temperatur ($T_{old}$) im Inneren des Raums.

6. Verfahren nach Anspruch 5, wobei der erste vorbestimmte Zeitraum zwischen 1 Tag und 15 Tagen beträgt.

7. Verfahren nach einem der Ansprüche 5 oder 6, wobei der zweite vorbestimmte Zeitraum zwischen 1 und 48 Stunden beträgt.

8. Verfahren nach einem der vorangehenden Ansprüche, wobei ein Gasanalysator den Kohlendioxidpartialdruck misst.

9. Verfahren nach einem der vorangehenden Ansprüche, wobei ein Kohlendioxidpartialdruck auf der Grundlage einer Betriebsdauer eines CO2-Wäschers und des Wirkungsgrads des CO2-Wäschers bestimmt wird.

10. Vorrichtung zum Kontrollieren der Atmosphäre in einem verschließbaren Raum, der zumindest teilweise mit landwirtschaftlichen oder gartenbaulichen Produkten gefüllt ist, umfassend:

a) einen Gasanalysator (306),
b) einen CO2-Wäscher (307),
c) ein Stickstofferzeugungssystem (308),
d) ein Kontrollsystem (305),
e) ein Sauerstoffeinspritzsystem (315),
f) ein Temperaturkontrollsystem (309),

wobei die Vorrichtung dazu ausgestaltet ist, das Verfahren nach einem der vorangehenden Ansprüche auszuführen.

11. Computerprogrammprodukt mit computerausführbarem Programmcode zum Ausführen des Verfahrens nach einem der Ansprüche 1 bis 9, wenn das Programm auf einem Gerät ausgeführt wird.

**Revendications**

1. Procédé de commande de l'atmosphère dans un espace pouvant être fermé au moins partiellement rempli de produits agricoles ou horticoles,

dans lequel une pression partielle de dioxyde de carbone est mesurée périodiquement à l'intérieur de l'espace pouvant être fermé,
dans lequel une pression partielle d'oxygène optimale ($P_{new}$) et/ou une température optimale ($T_{new}$) pour le stockage des produits agricoles ou horticoles sont réglées à l'intérieur de l'espace,
**caractérisé en ce que**
la pression partielle d'oxygène optimale ($P_{new}$) et/ou la température optimale ($T_{new}$) sont déterminées et réglées sur la base uniquement des mesures de la pression partielle de dioxyde de carbone,
dans lequel la pression partielle d'oxygène optimale ($P_{new}$) est déterminée au moyen de l'équation suivante :

$$P_{new} = \left\{ \left| \left( P_{old} - \left( \frac{d[CO2]}{dt} * f_{CO2} \right) \right) \right| + \left( \frac{\left( \frac{d[CO2]}{dt} \right) * f_{CO2}}{AMF} \right) \right\} + SV,$$

où
$P_{old}$ est une pression partielle d'oxygène actuellement réglée,
$\frac{d[CO2]}{dt}$ est un taux de variation de la pression partielle ou de la concentration de dioxyde de carbone, $f_{CO2}$ est une variable dépendant de la variation de la pression partielle ou de la concentration de dioxyde de carbone dans l'espace, où $f_{CO2}$ varie entre 1 h et 24 h, $AMF$ est un facteur de métabolisme anaérobie qui varie entre 1 et 25 et $SV$ est une valeur de sécurité qui varie entre 0 kPa et 2 kPa,
dans lequel la température optimale ($T_{new}$) est déterminée au moyen de l'équation suivante :

$$T_{new} = \left( \frac{\beta - \left( \frac{d[CO2]}{dt} * f_{CO2} \right)}{\left( \frac{CTF}{f_{CO2}} \right)} \right) + T_{old}$$

, où $\beta$ est une valeur de décharge de dioxyde de carbone optimale qui varie entre 0,1 kPa et 2,0 kPa, $T_{old}$ est une température actuellement réglée et $CTF$ est un facteur de température de cultivar qui varie entre 1 (kPa * h)/°C et 25 (kPa * h)/°C.

2. Procédé selon la revendication 1, dans lequel les mesures périodiques de la pression partielle de dioxyde de carbone sont mesurées dans chaque cas pendant une durée prédéfinie.

3. Procédé selon l'une des revendications précédentes, dans lequel une pression partielle d'oxygène ($P_{old}$) est maintenue dans une plage de $\pm$ 0,1 kPa entre au moins deux mesures de la pression partielle de dioxyde de carbone.

4. Procédé selon l'une des revendications précédentes, dans lequel un épurateur de CO2 est désactivé entre au moins deux mesures de la pression partielle de dioxyde de carbone.

5. Procédé selon l'une des revendications précédentes, le procédé comprenant les étapes consistant à :

a) régler des valeurs initiales pour une pression partielle d'oxygène, une pression partielle de dioxyde de carbone et une température dans l'espace,
b) maintenir les valeurs réglées pour la pression partielle d'oxygène ($P_{old}$), la pression partielle de dioxyde de carbone et la température ($T_{old}$) dans l'espace pendant une première durée prédéfinie,
c) mesurer une première pression partielle de dioxyde de carbone à l'intérieur de l'espace,
d) désactiver un épurateur de CO2 pendant une seconde durée prédéfinie,
e) mesurer une seconde pression partielle de dioxyde de carbone à l'intérieur de l'espace,
f) déterminer une variation de la pression partielle de dioxyde de carbone ($\frac{d[CO2]}{dt}$) à l'intérieur de l'espace sur la base des première et seconde mesures de pression partielle de dioxyde de carbone,
g) déterminer et régler la pression partielle d'oxygène optimale ($P_{new}$) et/ou la température optimale ($T_{new}$) sur la base de la variation de la pression partielle de dioxyde de carbone et de la pression partielle d'oxygène ($P_{old}$) et/ou de la température ($T_{old}$) précédemment réglées à l'intérieur de l'espace.

6. Procédé selon la revendication 5, dans lequel la première durée prédéfinie est comprise entre 1 jour et 15 jours.

7. Procédé selon une des revendications 5 ou 6, dans lequel la seconde durée prédéfinie est comprise entre 1 et 48 heures.

8. Procédé selon l'une des revendications précédentes, dans lequel un analyseur de gaz mesure la pression partielle de dioxyde de carbone.

9. Procédé selon l'une des revendications précédentes, dans lequel une pression partielle de dioxyde de carbone est déterminée sur la base d'un temps de marche d'un épurateur de CO2 et de l'efficacité de l'épurateur de CO2.

10. Appareil de commande de l'atmosphère dans un espace pouvant être fermé au moins partiellement rempli de produits agricoles ou horticoles, comprenant :

a) un analyseur de gaz (306),
b) un épurateur de CO2 (307),
c) un système de production d'azote (308),
d) un système de commande (305),
e) un système d'injection d'oxygène (315),
d) un système de commande de température (309),

dans lequel l'appareil est conçu pour exécuter le procédé selon l'une des revendications précédentes.

11. Produit programme informatique comprenant du code de programme exécutable par un ordinateur pour mettre en œuvre le procédé selon une des revendications 1 à 9 quand le programme est exécuté sur un appareil.

Fig. 1

Fig. 2

CO2-srubber

307

Storage chamber

300

304  Temperature sensor

Gas analyser

306

Oxygen Injection system

315

Control system

305

N2-generator

308

Temperatur control system

309

318

Ventilator fans

O2

304  Temperature sensor

303  Product

Lung  316

over-/underpressure safety valve  317

Temperature sensor  304

CA-Door/Gate  313

Fig. 3

Fig. 4

**EP 4 003 032 B1**

**REFERENCES CITED IN THE DESCRIPTION**

**Patent documents cited in the description**

- EP 2816890 B1
- WO 0206795 A3
- US 20120097050 A1
- EP 2547213 B1
- EP 2918179 A1
- WO 2013125944 A1
- WO 2017198793 A1
- WO 2017134288 A1